# EUROPÄISCHE PATENTANMELDUNG

(11) **EP 0 918 001 A2**
(43) Veröffentlichungstag der Anmeldung: **26.05.1999**
(21) Anmeldenummer: 98120978.6
(22) Anmeldetag: 05.11.1998
(51) Int. Cl.: B60R 25/04

(54) **Elektronisches Zündschlosssystem, insbesondere für Kraftfahrzeuge**

(30) Priorität: 24.11.1997 DE 19751805
(71) Anmelder: DaimlerChrysler AG, 70567 Stuttgart (DE)
(72) Erfinder: Fitz, Hartmut, 73660 Urbach (DE); Geber, Michael, 72574 Bad Urach (DE); Ohle, Jörn-Marten, 71229 Leonberg (DE)

(57) **Zusammenfassung**

Die Erfindung betrifft ein elektronisches Zündschloßsystem, insbesondere für ein Kraftfahrzeug, mit einem elektronischen Zündschlüssel und einem elektronischen Zündschloß mit einer Schlüsselaufnahme zur Inbetriebnahme eines zugehörigen Betriebsaggregats, wobei der Zündschlüssel zum Austausch von einem codierten Betriebssignal in die Schlüsselaufnahme eingeführt wird, wobei Mittel zur Verschlüsselung und Entschlüsselung des codierten Betriebssignal vorgesehen sind, wobei eine positive Auswertung des codierten Betriebssignals eine Entriegelung einer Sperreinrichtung bewirkt, wodurch die Schlüsselaufnahme mit dem eingeführten elektronischen Zündschlüssel aus einer Ausgangsstellung in mindestens eine Gebrauchsstellung bewegbar ist. Erfindungsgemäß ist eine mechanische Sperreinrichtung zur Sperrung der Bewegung der Schlüsselaufnahme vorgesehen, wobei die mechanische Sperreinrichtung durch ein Zusammenwirken mit einer korrespondierenden Kontur des Zündschlüssels entriegelbar ist, wobei Betätigungsmittel vorgesehen sind, welche ein Entriegeln der mechanischen Sperreinrichtung erkennen, und wobei nach dem erkannten Entriegeln der mechanischen Sperreinrichtung der Austausch von codierten Betriebssignalen aktivierbar ist.

## Beschreibung

Die Erfindung betrifft eine elektronisches Zündschloßsystem für Kraftfahrzeuge gemäß dem Oberbegriff des Patentanspruchs 1.

Solche elektronischen Zündschloßsysteme umfassen ein elektronisches Zündschloß und wenigstens einen zugehörigen elektronischen Zündschlüssel und werden in Kraftfahrzeugen zur Identifizierung des wenigstens einen zum elektronischen Zündschloß gehörigen Zündschlüssel eingesetzt. Bei solchen elektronischen Zündschloßsystemen erfolgt die Identifizierung des wenigstens einen elektronischen Zündschlüssels über einen Datenaustausch von codierten Betriebssignalen zwischen dem elektronischen Zündschloß und dem wenigstens einen elektronischen Zündschlüssei, wobei nur bei einer positiven Identifizierung bestimmte Betriebsaggregate aktiviert bzw. freigeben werden, beispielsweise eine im Fahrzeug angeordnete Wegfahrsperre, Diebstahlwarnanlage, Lenkradschloß usw.. Die mechanischen Komponenten und Formen der verwendeten elektronischen Zündschlüssel und Zündschlösser sind dabei standardisiert, d. h. der elektronische Zündschlüssel kann in jedes elektronische Zündschloß des gleichen Typs eingeführt werden, um günstigere Fertigungskosten zu erreichen.

Die DE 33 06 863 C2 beschreibt ein gattungsgemäßes elektronisches Zündschloßsystem mit einem elektronischen Zündschlüssel mit Mitnehmerelementen für eine Schließeinrichtung und einem elektronischen Zündschloß mit einer Schlüsselaufnahme für den elektronischen Zündschlüssel, wobei bei in die Schlüsselaufnahme eingeführtem elektronischen Zündschlüssel ein Datenaustausch zwischen dem elektronischen Zündschlüssel und dem elektronischen Zündschloß stattfindet, wobei Einrichtungen zur Ver- bzw. Entschlüsselung des codierten Betriebssignals und zur Inbetriebnahme mindestens eines zugehörigen Betriebsaggregats vorgesehen sind, wobei die Mitnehmerelemente des elektronischen Zündschlüssels mit entsprechenden Mitnehmerelementen der Schlüsselaufnahme für einen formschlüssigen Eingriff korrespondieren, wobei eine Bewegung der Schlüsselaufnahme durch eine Sperreinrichtung verhindert wird und wobei die Sperreinrichtung nach einem erfolgreich durchgeführten Datenaustausch zwischen dem elektronischen Zündschlüssel und dem elektronischen Zündschloß entriegelt wird, wodurch eine translatorische oder rotatorische Bewegung der Schlüsselaufnahme mit dem eingeführten elektronischen Zündschlüssel möglich wird. Zudem wird die Stellung des elektronischen Zündschlüssels in der Schlüsselaufnahme mittels entsprechender elektrischer Kontakte ausgewertet und zur Aktivierung von verschiedenen Betriebsaggregaten verwendet.

Als nachteilig kann bei dieser Lösung angesehen werden, daß durch Manipulation der entsprechenden elektrischen Kontakte im elektronischen Zündschloß auch ohne einen elektronischen Zündschlüssel des entsprechenden Typs eine Spannungsversorgung für die notwendigen elektronischen Schaltungen im Kraftfahrzeug aktiviert werden kann.

Aufgabe der Erfindung ist es, ein gattungsgemäßes elektronisches Zündschloßsystem derart weiterzubilden, daß die Betriebssicherheit erhöht und eine Manipulation des elektronischen Zündschlosses nahezu verhindert wird.

Diese Aufgabe wird erfindungsgemäß mit den Merkmalen des Anspruchs 1 gelöst. Die übrigen Ansprüche kennzeichnen vorteilhafte Aus- und Weiterbildungen der Erfindung.

In vorteilhafterweise wird in einer Schlüsselaufnahme eine mechanische Sperreinrichtung so angeordnet, daß in ihrer Verriegelungsstellung bei einem nicht vorschriftsmäßig eingeführtem elektronischen Zündschlüssel eine Bewegung der Schlüsselaufnahme innerhalb des elektronischen Zündschlosses verhindert wird und bei einem vorschriftsmäßig eingeführten elektronischen Zündschlüssel die Schlüsselaufnahme für eine Bewegung freigegeben wird. Zusätzlich werden durch die mechanische Sperreinrichtung elektrische und/oder elektronische Betätigungseinrichtungen betätigt, welche mittels einer elektronischen Auswerte- und/oder Steuerschaltung ausgewertet werden, wobei die Auswerte- und/oder Steuerschaltung ein Schlüsselsteckt-Signal erzeugt. Das Schlüsselsteckt-Signal wird beispielsweise dazu verwendet, ein elektronisches Bussystem "aufzuwecken", daß heißt, die entsprechenden elektrischen und/oder elektronischen Schaltkreise zur Durchführung des Datenaustausches zwischen dem elektronischen Zündschlüssel und dem elektronischen Zündschloß mit Betriebsspannung zu versorgen. Außerdem kann dieses Schlüsselsteckt-Signal dazu verwendet werden eine Energieübertragung mittels einer aus dem Stand der Technik bekannten Spulenanordnung zwischen dem elektronischen Zündschlüssel und dem elektronischen Zündschloß durchzuführen. Als weiterer Vorteil ergibt sich bei der beschriebenen Anordnung, daß der elektronische Zündschlüssel beim Einführen in die Schlüsselaufnahme des elektronischen Zündschlosses durch die Kraftwirkung der Sperrvorrichtung auf den elektronischen Zündschlüssel nahezu spielfrei geführt wird. Diese nahezu spielfreie Führung des elektronischen Zündschlüssels innerhalb der Schlüsselaufnahme kann durch eine zusätzliche in der Schlüsselaufnahme angeordnete Abzugssicherung noch verbessert werden. Durch eine solche Abzugssicherung wird außerdem erreicht, daß der elektronische Zündschlüssel nur in einer Ausgangsstellung der Schlüsselaufnahme aus der Schlüsselaufnahme abgezogen werden kann. Sobald die Schlüsselaufnahme mit dem eingeführten elektronischen Zündschlüssel aus der Ausgangsstellung in eine Gebrauchsstellung bewegt wird, verhindert die Abzugssicherung ein Abziehen des elektronischen Zündschlüssels.

Bei einer besonders vorteilhaften Ausführung der Erfindung wird ein Teil des elektronischen Zündschlüssels als Stecker und die Schlüsselaufnahme des elektronischen Zündschlosses als korrespondierende Steckdose ausgeführt, wobei der als Stecker ausgeführte Teil des elektronischen Zündschlüssels in der Ausgangsstellung der Schlüsselaufnahme formschlüssig in die Schlüsselaufnahme eingeführt werden kann, wobei die bereits beschriebene mechanische Sperreinrichtung bzw. die Abzugssicherung durch die äußere Form des Steckers freigeben bzw. gesichert werden. Ist der Zündschlüssel vorschriftsmäßig in die Schlüsselaufnahme eingeführt, d. h. der als Stecker ausgeführte Teil des Zündschlüssels ist vollständig in die als Steckdose ausgeführte Schlüsselaufnahme eingeführt, so wird der elektronische Zündschlüssel durch die Krafteinwirkung der Sperreinrichtung und der Abzugssicherung auf den Stecker des elektronischen Zündschlüssels in der Schlüsselaufnahme gehalten und die Schlüsselaufnahme kann mit dem Zündschlüssel, nach einer erfolgreich durchgeführten Identifizierung des elektronischen Zündschlüssels, aus der Ausgangsstellung der Schlüsselaufnahme in mehrere Gebrauchsstellungen gedreht werden, wobei die Gebrauchsstellungen der Schlüsselaufnahme mit dem eingeführten Zündschlüssel den verschieden Stellungen eines herkömmlichen Zündschlosses entsprechen, und wobei die verschiedenen Stellungen der Schlüsselaufnahme mittels zugeordneter Detektoren, welche beispielsweise als Mikroschalter ausgeführt sind, detektiert werden. Die Ausgangsstellung der Schlüsselaufnahme entspricht dabei der allgemein bekannten Zündschloßstellung "Zündung aus". Eine erste Gebrauchsstellung entspricht der allgemein bekannten Zündschloßstellung "Radio", eine zweite Gebrauchsstellung entspricht der allgemein bekannten Zündschloßstellung "Zündung an" und eine dritte Gebrauchsstellung entspricht der allgemein bekannten Zündschloßstellung "Motorstart", wobei entsprechende Mittel vorgesehen sind, welche die Schlüsselaufnahme mit dem eingeführten elektronischen Zündschlüssel nach einem Motorstart wieder automatisch in die zweite Gebrauchslage zurücksetzen. Grundsätzlich ist es aber auch vorstellbar, die Schlüsselaufnahme mit dem Zündschlüssel durch eine translatorische Bewegung, beispielsweise durch Drücken, aus der Ausgangsstellung in die verschiedenen Gebrauchsstellungen zu bewegen.

Zur Erhöhung des Diebstahlschutzes kann als zusätzliche Sicherheitsmaßnahme in jeder Gebrauchsstellung der Schlüsselaufnahme mittels der Detektoren zur Erkennung der Stellung der Schlüsselaufnahme der Datenaustausch zur Identifizierung des elektronischen Zündschlüssels durchgeführt werden, bevor die der Gebrauchsstellung zugeordneten Betriebsaggregate aktiviert oder freigeschaltet werden.

Ausführungsbeispiele der Erfindung sind in der Zeichnung dargestellt und werden im folgenden näher beschrieben.

Es zeigen:
- Fig. 1: Prinzipdarstellung eines elektronischen Zündschloßsystems mit einem vor dem Zündschloß positionierten elektronischen Zündschlüssel,
- Fig. 2: Darstellung eines elektronischen Zündschloßsystems mit einem teilweise in das Zündschloß eingeführten elektronischen Zündschlüssel,
- Fig. 3: Darstellung eines elektronischen Zündschloßsystems mit einem vorschriftsmäßig in das Zündschloß eingeführten elektronischen Zündschlüssel,
- Fig. 4: Darstellung eines Querschnittes entlang der Schnittlinie IV gemäß Fig. 1 durch ein elektronisches Zündschloß,
- Fig. 5: Darstellung eines Querschnittes entlang der Schnittlinie V gemäß Fig. 2 durch ein elektronisches Zündschloß mit einem teilweise eingeführten elektronischen Zündschlüssel,
- Fig. 6: Darstellung eines Querschnittes entlang der Schnittlinie VI gemäß Fig. 1 durch ein elektronisches Zündschloß,
- Fig. 7: Darstellung eines Querschnittes entlang der Schnittlinie VII gemäß Fig. 3 durch ein elektronisches Zündschloß mit einem vorschriftsmäßig eingeführten elektronischen Zündschlüssel,

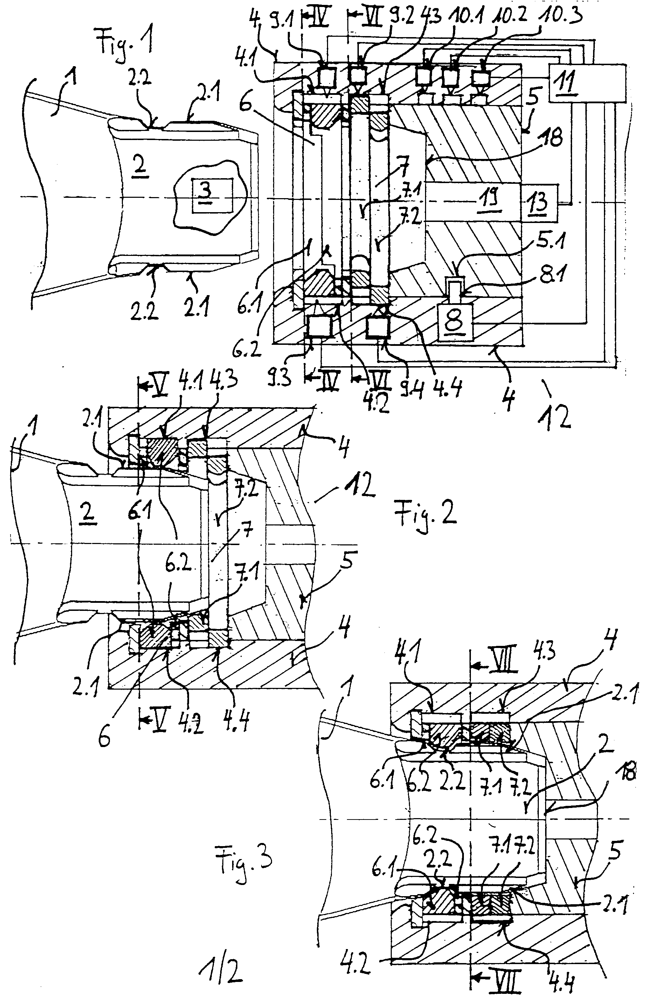

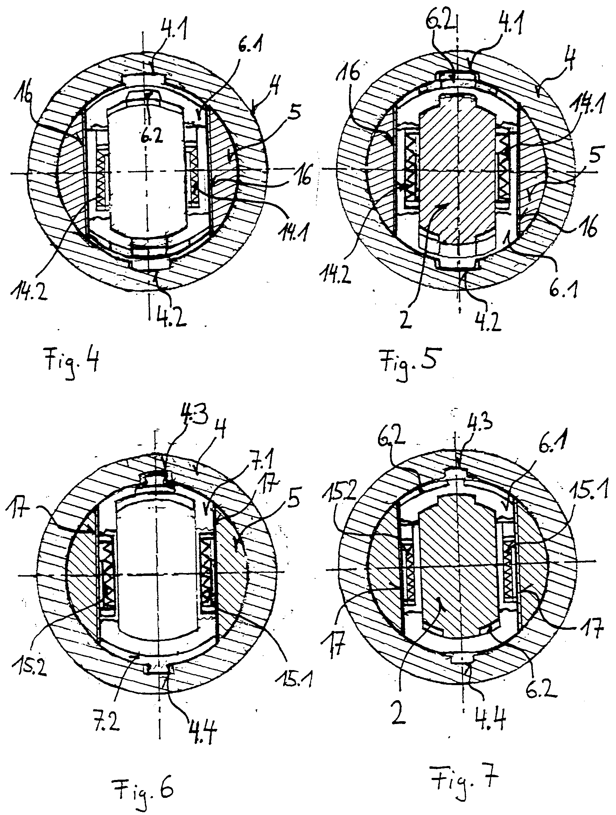

Wie aus der Fig. 1 ersichtlich ist umfaßt das elektronische Zündschloßsystem einen elektronischen Zündschlüssel 1, wobei ein Teil des elektronischen Zündschlüssels 1 als Stecker 2 mit angeformten Entriegelungsnasen 2.1 und mit Rastkerben 2.2 ausgebildet ist und eine erste Kommunikationseinrichtung 3 mit Einrichtungen zum Ver- bzw. Entschlüsseln von codierten Betriebssignalen umfaßt, sowie einem elektronischen Zündschloß 12 mit einem Zündschloßgehäuse 4, einer Schlüsselaufnahme 5, welche als Steckdose in Form einer Drehhülse ausgeführt ist, einer zweiten Kommunikationseinrichtung 13 mit Einrichtungen zum Ver- bzw. Entschlüsseln von codieren Betriebssignalen, einer Abzugssicherung 6, welche als Rastschieberpaar ausgebildet ist und einen ersten Rahmen 6.1, einen zweiten Rahmen 6.2 und ein erstes Federpaar 14.1, 14.2 umfaßt, einer mechanischen Sperreinrichtung 7, welche als Sperrschieberpaar ausgebildet ist und einen dritten Rahmen 7.1, einen vierten Rahmen 7.2 und ein zweites Federpaar 15.1, 15.2 umfaßt, wobei die mechanische Sperreinrichtung 7 und die Abzugssperre 6 jeweils in einem Führungsschacht 16, 17 in der Schlüsselaufnahme 5 beweglich gelagert sind, einer Sperreinrichtung 8, welche als elektromagnetische Sperreinrichtung mit einem Elektromagneten und einem Verriegelungsbolzen 8.1 ausgeführt ist, einer elektronischen Auswerte- und/oder Steuerschaltung 11 und wenigstens einem Betätigungsmittel 9.1, 9.2, 9.3, 9.4 zur Schlüsselsteckt-Auswertung und Detektoren 10.1, 10.2, 10.3 zur Auswertung der Drehstellung der Schlüsselaufnahme 5. Wie weiter aus der Fig. 1 ersichtlich ist, ist der elektronische Zündschlüssel 1 vor dem elektronischen Zündschloß 12 positioniert und die Abzugssicherung 6 und die mechanische Sperreinrichtung 7 befinden sich in ihren Ausgangslagen, d. h. die Außenkonturen der beiden Rahmen 6.1 und 6.2 der als Rastschieberpaar ausgeführten Abzugssicherung 6 ragen nicht über die als Drehhülse ausgeführte Schlüsselaufnahme 5 hinaus (siehe hierzu auch Fig. 4) und die beiden Rahmen 7.1 und 7.2 der als Sperrschieberpaar ausgeführten mechanischen Sperreinrichtung 7 sind diametral gegeneinander verschoben und jeweils ein Ende der beiden Rahmen 7.1, 7.2, welche beispielsweise als Verriegelungsnocken ausgebildet sind, ragen über den Umfang der Drehhülse hinaus und greifen in Ausnehmungen 4.3, 4.4 im Gehäuse 4 des Zündschlosses 12 ein, wobei das Ende des dritten Rahmens 7.1 in eine dritte Ausnehmung 4.3 und das Ende des vierten Rahmens 7.2 in eine vierte Ausnehmung 4.4 im Gehäuse 4 des elektronischen Zündschlosses 12 eingreifen und somit eine Drehbewegung der Schlüsselaufnahme 5 verhindern. Die Ausführung der Enden der beiden Rahmen 7.1, 7.2 als Verriegelungsnocken, hat den Vorteil, daß die mit den Verriegelungsnocken korrespondierenden Ausnehmungen 4.3, 4.4 im Gehäuse 4 des elektronischen Zündschlosses ebenfalls klein bemessen werden können (siehe hierzu auch Fig. 6). Der Verriegelungsbolzen 8.1 der weiteren Sperreinrichtung 8 greift in eine Ausnehmung 5.1 in der Schlüsselaufnahme 5 ein, und sperrt somit ebenfalls die Schlüsselaufnahme 5 gegen eine Drehbewegung. Zur Verdeutlichung der Einführbewegung des elektronischen Zündschlüssels 1 in das elektronische Zündschloß 12 bzw. in die Schlüsselaufnahme 5 wird auf die Fig. 2 und 3 und die zugehörigen Schnittdarstellungen verwiesen.

Fig. 2 zeigt die wesentlichen mechanischen Teile des elektronischen Zündschloßsystems mit einem teilweise in die Schlüsselaufnahme 5 eingeführtem elektronischen Zündschlüssel 1. Wie aus der Fig. 2 ersichtlich ist werden die beiden Rahmen 6.1 und 6.2 der Abzugssicherung 6 durch die Entriegelungsnasen 2.1 des Steckers 2 des elektronischen Zündschlüssels 1 gegen die Federkraft des Federpaars 14.1, 14.2 diametral gegeneinander aus der als Drehhülse ausgeführten Schlüsselaufnahme verschoben und jeweils ein Ende der beiden Rahmen 6.1, 6.2, welche beispielsweise als Verriegelungsnocken ausgebildet sind, ragen über den Umfang der Drehhülse hinaus und greifen in Ausnehmungen 4.1, 4.2 im Gehäuse 4 des Zündschlosses 12 ein, wobei das Ende des ersten Rahmens 6.1 in die erste Ausnehmung 4.1 und das Ende des zweiten Rahmens 6.2 in die zweite Ausnehmung 4.2 eingreift. Die Ausführung der Enden der beiden Rahmen 6.1, 6.2 als Verriegelungsnocken, hat den Vorteil, daß die mit den Verriegelungsnocken korrespondierenden Ausnehmungen 4.1, 4.2 im Gehäuse 4 des elektronischen Zündschlosses ebenfalls klein bemessen werden können (siehe hierzu auch Fig. 5). Bei der in der Fig. 2 dargestellten Position des elektronischen Zündschlüssels 1 ist die mechanische Sperreinrichtung 7 noch nicht betroffen, sie befindet sich noch in ihrer bereits in den Ausführungen zu Fig. 1 beschriebenen Sperrstellung, wobei das Ende des dritten Rahmens 7.1 in die dritte Ausnehmung 4.3 und das Ende des vierten Rahmens 7.2 in die vierte Ausnehmung 4.4 im Gehäuse 4 des elektronischen Zündschlosses 12 eingreift (siehe hierzu auch Fig. 6).

Fig. 3 zeigt die wesentlichen mechanischen Teile des elektronischen Zündschloßsystems mit einem vorschriftsmäßig in die Schlüsselaufnahme 5 eingeführten elektronischen Zündschlüssel 1, d. h. der als Stecker 2 ausgebildete Teil des elektronischen Zündschlüssels 1 ist vollständig bis zum Anschlag 18 in die Schlüsselaufnahme 5 eingeführt. Wie aus der Fig. 3 ersichtlich ist, werden die beiden Rahmen 7.1 und 7.2 der mechanischen Sperreinrichtung 7 durch die Entriegelungsnasen 2.1 des Steckers 2 des elektronischen Zündschlüssels 1 gegen die Federkraft des Federpaars 15.1 und 15.2 diametral gegeneinander verschoben und in die als Drehhülse ausgeführte Schlüsselaufnahme 5 gedrückt, wobei die Enden der beiden Rahmen 7.1, 7.2 aus den Ausnehmungen 4.3, 4.4 gezogen werden. Somit wird durch den vorschriftsmäßig eingeführten elektronischen Schlüssel die beiden Rahmen 7.1, 7.2 in einer Freigabestellung gehalten (siehe hierzu auch Fig. 7). Die beiden Rahmen 6.1, 6.2 der Abzugssicherung 6 werden durch den vorschriftsmäßig eingeführten elektronischen Zündschlüssel 1 mittels der Federkraft des Federpaars 14.1, 14.2 aus den Ausnehmungen 4.3, 4.4 im Gehäuse 4 des elektronischen Zündschlosses 12 zurück in die als Drehhülse ausgeführte Schlüsselaufnahme 5 gedrückt, wobei die Innenseiten der beiden Rahmen in die Rastkerben 2.2 des Steckers 2 des elektronischen Zündschlüssels 1 einrasten. Die Abzugssicherung nimmt somit wieder ihre Ausgangslage gemäß der Darstellung in Fig. 1 ein, wobei die Ausgangslage mit dem in die Schlüsselaufnahme 5 eingeführten elektronischen Zündschlüssel 1 einer Sicherungsstellung entspricht. Wird die Schlüsselaufnahme 5 mit dem eingeführten elektronischen Zündschlüssel 1 nun aus ihrer Ausgangsstellung in eine Gebrauchsstellung bewegt, so kann der Zündschlüssel nicht aus der Schlüsselaufnahme gezogen werden, da die entsprechenden Ausnehmungen 4.1, 4.2 im Gehäuse 4 des Zündschlosses 12 nur in der Ausgangsstellung der Schlüsselaufnahme 5 mit den Enden der beiden Rahmen 6.1, 6.2 der Abzugssicherung 6 korrespondieren.

Beim Einführen des elektronischen Zündschlüssels 1 werden die durch die mittels den Entriegelungsnasen 2.1 und den Rastkerben 2.2 des Steckers 2 des elektronischen Zündschlüssels 1 erzwungenen Bewegungen der Rahmen 7.1, 7.2, 6.1, 6.2 durch im Gehäuse 4 des elektronischen Zündschlosses angeordneten Betätigungseinrichtungen 9.1, 9.2, 9.3, 9.4 erkannt und von der elektronischen Auswerte- und/oder Steuereinrichtung ausgewertet, wobei beim Einführen des elektronischen Zündschlüssels zuerst die Bewegungen der beiden Rahmen 7.1, 7.2 durch die beiden Betätigungseinrichtungen 9.1, 9.3, dann die Bewegungen der beiden Rahmen 6.1, 6.2 durch die beiden Betätigungseinrichtungen 9.2 und 9.4 und dann die Bewegungen der beiden Rahmen 7.1 und 7.2 durch die beiden Betätigungseinrichtungen 9.1 und 9.3 erkannt werden. Durch eine Auswertung der Betätigungseinrichtungen 9.1, 9.2, 9.3, 9.4 wird mittels der Auswerte- und/oder Steuerschaltung 11 eine Schlüsselsteckt-Auswertung durchgeführt, welche nur bei einem vorschriftsmäßig eingeführten elektronischen Zündschlüssel 1 zu einem positiven Ergebnis kommt und ein Schlüsselsteckt-Signal erzeugt. Durch dieses Schlüsselsteckt-Signal wird die Datenübertragung zur Identifizierung des elektronischen Zündschlüssels 1 gestartet. Zu diesem Zweck tauschen die erste Kommunikationseinrichtung 3 im elektronischen Zündschlüssel 1 und die zweite Kommunikationseinrichtung 13 im elektronischen Zündschloß 12 über eine Übertragungsstrecke 19, welche beispielsweise als Lichtleiter ausgeführt ist, codierte Betriebssignale aus und nur wenn der wenigstens eine zum elektronischen Zündschloß 12 gehörende elektronische Zündschlüssel 1 erkannt wird, wird das mindestens eine zugehörige Betriebsaggregat, beispielsweise die weitere Sperreinrichtung 8 freigegeben und der Sperrbolzen 8.1 aus der Ausnehmung 5.1 in der Schlüsselaufnahme 5 gezogen und die Schlüsselaufnahme 5 mit dem vorschriftsmäßig eingeführten elektronischen Zündschlüssel 1 wird für eine Drehbewegung aus der Ausgangsstellung in eine Gebrauchsstellung freigegeben. Abhängig von der Drehstellung der Schlüsselaufnahme 5, welche von entsprechenden Detektoren 10.1, 10.2, 10.3, welche beispielsweise als Mikroschalter ausgeführt sind und mittels entsprechende Betätigungsnocken ausgelöst werden, werden weitere Betriebsaggregate aktiviert oder freigegeben, beispielsweise eine elektronische Wegfahrsperre, ein Lenkradschloß, Zündung usw.. Zudem kann bei Erreichen der verschiedenen Drehstellungen der bereits beschriebenen Datenaustausch zur Identifizierung des elektronischen Zündschlüssels 1 durchgeführt werden. Außerdem kann das Ergebnis der Auswertung dieses Datenaustausches zusätzlich in die Schlüsselsteckt-Auswertung einbezogen werden, insbesondere wenn die Schlüsselaufnahme 5 sich nicht in ihrer Ausgangsstellung befindet, um sicherzustellen, daß auch in den Gebrauchsstellungen ein zu dem elektronischen Zündschloß 12 zugehöriger elektronischer Zündschlüssel 1 vorschriftsmäßig eingeführt ist.

## Patentansprüche

1. Elektronisches Zündschloßsystem, insbesondere für Kraftfahrzeuge, mit einem elektronischen Zündschlüssel und einem elektronischen Zündschloß mit einer Schlüsselaufnahme zur Inbetriebnahme eines zugehörigen Betriebsaggregats, wobei der Zündschlüssel zum Austausch von einem codierten Betriebssignal in die Schlüsselaufnahme eingeführt wird, wobei Mittel zur Ver- und Entschlüsselung des codierten Betriebssignals vorgesehen sind, wobei eine positive Auswertung des codierten Betriebssignals eine Entriegelung einer Sperreinrichtung bewirkt, wodurch die Schlüsselaufnahme mit dem eingeführten elektronischen Zündschlüssel aus einer Ausgangsstellung in mindestens eine Gebrauchsstellung bewegbar ist
**dadurch gekennzeichnet,**
daß eine mechanische Sperreinrichtung (7) zur Sperrung der Bewegung der Schlüsselaufnahme (5) vorgesehen ist, wobei die mechanische Sperreinrichtung (7) durch ein Zusammenwirken mit einer korrespondierenden Kontur (2.1) des Zündschlüssels (1) entriegelbar ist, wobei Betätigungsmittel (9.2, 9.4) vorgesehen sind, welche ein Entriegeln der mechanischen Sperreinrichtung (7) erkennen, und wobei nach dem erkannten Entriegeln der mechanischen Sperreinrichtung (7) der Austausch von codierten Betriebssignalen aktivierbar ist

2. Elektronisches Zündstartsystem Anspruch 1,
**dadurch gekennzeichnet,**
daß die mechanische Sperreinrichtung (7) als Sperrschieberpaar (7.1, 7.2) ausgebildet ist und in einem ersten Führungsschacht (17) in der als Drehhülse ausgeführten Schlüsselaufnahme (5) beweglich gelagert ist, wobei das Sperrschieberpaar (7.1, 7.2) einen dritten Rahmen (7.1), einen vierten Rahmen (7.2) und ein erstes Federpaar (15.1, 15.2) umfaßt.

3. Elektronisches Zündschloßsystem nach Anspruch 2,
**dadurch gekennzeichnet,**
daß in der Ausgangsstellung der Schlüsselaufnahme (5) ohne eingeführten elektronischen Zündschlüssel (1) die beiden Rahmen (7.1, 7.2) diametral gegeneinander verschoben sind und die Enden der beiden Rahmen (7.1, 7.2) aus der Schlüsselaufnahme (5) herausragen und in Ausnehmungen (4.3, 4.4) im Gehäuse (4) des elektronischen Zündschlosses (12) eingreifen, wodurch die Schlüsselaufnahme (5) gegen eine Bewegung aus der Ausgangsstellung in wenigstens eine Gebrauchsstellung gesperrt wird, und daß Entriegelungsnasen (2.1) an den elektronischen Zündschlüssel (1) angeformt sind, welche bei einem vorschriftsmäßig eingeführten elektronischen Zündschlüssel (1) die beiden Rahmen (7.1, 7.2) gegen die Federkraft des Federpaars (15.1, 15.2) diametral gegeneinander in die Schlüsselaufnahme (5) verschieben und so die Enden der beiden Rahmen (7.1, 7.2) aus den Ausnehmungen (4.3, 4.4) im Gehäuse (4) des elektronischen Zündschlosses (12) gezogen werden.

4. Elektronisches Zündschloßsystem nach Anspruch 1,
**dadurch gekennzeichnet,**
daß eine Abzugssicherung (6) in der als Drehhülse ausgeführten Schlüsselaufnahme (5) vorgesehen ist, wobei die Abzugssicherung (6) durch ein Zusammenwirken mit einer korrespondierenden Kontur (2.1, 2.2) des Zündschlüssels (1) in eine Sicherungsstellung bringbar ist.

5. Elektronisches Zündschloßsystem nach Anspruch 4,
**dadurch gekennzeichnet,**
daß die Abzugssicherung (6) als Rastschieberpaar (6.1, 6.2) ausgebildet ist und in einem zweiten Führungsschacht (16) in der Schlüsselaufnahme (5) beweglich gelagert ist, wobei die Abzugssicherung (6) einen ersten Rahmen (6.1), einen zweiten Rahmen (6.2) und ein zweites Federpaar (14.1, 14.2) umfaßt, wobei die Entriegelungsnasen (2.1 beim Einführen des elektronischen Zündschlüssels (1) in die Schlüsselaufnahme (5) die beiden Rahmen gegen die Kraft des zweiten Federpaars (14.1, 14.2) diametral gegeneinander verschieben und die Enden der beiden Rahmen (6.1, 6.2) in Ausnehmungen (4.1, 4.2) im Gehäuse (4) des elektronischen Zündschlosses (12) drücken, wobei hinter den angeformten Entriegelungsnasen (2.1) Rastkerben (2.2) am elektronischen Zündschlüssel (1) vorgesehen sind, in welche die beiden Rahmen (6.1, 6.2) bei einem vorschriftsmäßig eingeführten Zündschlüssel (1) durch die Federkraft des zweiten Federpaars (14.1,14.2) gedrückt werden und somit die Enden der beiden Rahmen (6.1, 6.2) wieder aus den Ausnehmungen (4.1, 4.2) gezogen werden und die beiden Rahmen (6.1, 6.2) die Sicherungsstellung einnehmen, wobei die Abzugssicherung (6) nur in der Ausgangsstellung der Schlüsselaufnahme (5) aus der Sicherungsstellung in eine Entsicherungsstellung bewegbar ist.

6. Elektronisches Zündschloßsystem nach Anspruch 1,
**dadurch gekennzeichnet,**
daß die Betätigungsmittel (9.2, 9.4) zum Erkennen der Entriegelung der mechanischen Sperreinrichtung (7) von einer elektronischen Auswerte- und/oder Steuerschaltung (11) ausgewertet werden, wobei nach einer erkannten Entriegelung der mechanischen Sperreinrichtung (7) von der elektronischen Auswerte- und/oder Steuerschaltung (11) ein Schlüsselsteckt-Signal erzeugbar ist.

7. Elektronisches Zündschloßsystem nach Anspruch 6,
**dadurch gekennzeichnet,**
daß zusätzliche Betätigungsmittel (9.1, 9.3) eine Bewegung der Abzugssicherung (6) erkennen, wobei eine Auswertung der zusätzlichen Betätigungsmittel (9.1, 9.3) in die Auswertung zur Erzeugung das Schlüsselsteckt-Signal einbeziehbar ist.

8. Elektronisches Zündschloßsystem Anspruch 6,
**dadurch gekennzeichnet,**
daß die Auswertung des ausgetauschten mindestens einen codierten Betriebssignals in die Auswertung zur Erzeugung des Schlüsselsteckt-Signals einbeziehbar ist.

9. Elektronisches Zündschloßsystem nach Anspruch 1,
**dadurch gekennzeichnet,**
daß in jeder Gebrauchsstellung der Schlüsselaufnahme (5) vor der Inbetriebnahme von der Gebrauchsstellung zugeordneter Betriebsaggregate der Datenaustausch der codierten Betriebssignale zur Identifizierung des elektronischen Zündschlüssels (1) zwischen dem elektronischen Zundschlüssel (1) und dem elektronischen Zündschloß (12) durchführbar ist.
